# EUROPEAN PATENT APPLICATION

(11) **EP 1 603 038 A2**
(43) Date of publication of application: **07.12.2005**
(21) Application number: 05103961.8
(22) Date of filing: 12.05.2005
(51) Int. Cl.: G06F 9/445

(54) **Plug and Play functionality for unsupported devices**

(30) Priority: 14.05.2004 US 571271; 22.09.2004 US 947616
(71) Applicant: MICROSOFT CORPORATION, Redmond, WA 98052 (US)
(72) Inventor: Jensen, Craig A., 98052, Redmond (US); Husmann, Harlan, 98052, Redmond (US); Harrison, Janine A., 98052, Redmond (US); Bykov, Sergey I., 98052, Redmond (US); Belvin, Timothy E., 98052, Redmond (US); La Blanc, Sylvester M., 98052, Redmond (US)
(74) Representative: Zimmer, Franz-Josef

(57) **Abstract**

The present invention provides Plug and Play (PnP) functionality for devices that are not supported by an operating system. In response to the installation of an unsupported device, the operating system sends the event to a device manager application residing in user mode code. Upon receiving the event, the device manager application automatically installs the supporting configuration entries and software. After the device is installed, the device is accessible from an application without requiring any programming changes. Events are exposed to the application through a through a common control library (CCL). The library is directed at providing a generic interface for accessing the devices. Using the CCL the registered applications may receive events associated with the device.

## Description

### Related Applications

This utility patent application claims the benefit under 35 United States Code § 119(e) of United States Provisional Patent Application No. 60/571,271 filed on May 14, 2004, which is hereby incorporated by reference in its entirety.

### Background of the Invention

In the past 10 years, little has changed in the way a retailer consumes devices. The experience of installing retail devices today is similar to installing a device on a PC before the advent of plug and play. Often, there are device port conflicts between network cards, modems, mice, and other network cards when attempting to install the device. All too often retailers must "open the box, locate the device, and change a jumper setting" or perform some similar non-user friendly action. Installing these devices can be difficult and time-consuming.

### Summary of the Invention

Briefly stated, the present invention is directed at providing Plug and Play (PnP) functionality for devices that are not supported by an operating system.

According to one aspect of the invention, when an unsupported device is installed it is detected by the operating system. In response to the installation, the operating system sends the event to a device manager application residing in user mode. Upon receiving the install event, the device manager application determines the device that was added and automatically installs the supporting configuration entries and software. For example, the device manager application may automatically update the registry and install the support binaries for the device. After the device is installed, the retail device is accessible from an application without requiring any programming changes.

According to another aspect of the invention, PnP events are exposed to the retail application through a through a common control library (CCL). The library is directed at providing a generic interface for accessing the devices. Using the CCL the registered applications may receive events associated with the device.

According to yet another aspect of the invention, the CCL used to control the retail device operates in the user mode of the kernel as opposed to the kernel mode.

### Brief Description of the Drawings

FIGURE 1 illustrates an operating environment;
FIGURE 2 illustrates a general system diagram of PnP retail system;
FIGURE 3 illustrates a high level architecture diagram for the PnP system;
FIGURE 4 illustrates interaction between the PnP system and the CCL;
FIGURE 5 illustrates an architecture for integrating legacy devices with the PnP retail system;
FIGURE 6 shows exemplary helper classes and SO repositories;
FIGURE 7 illustrates integration an exemplary display for providing information about POS devices attached to the system; and
FIGURE 8 shows an exemplary screen shot of installed POS devices, in accordance with aspects of the present invention.

### Detailed Description of the Preferred Embodiment

The present invention is directed at allowing a "Plug and Play" like experience for users of retail devices, as well as other devices, not supported by the operating system. When a non-supported device is installed, the operating system sends the event, such as a PnP event, to a device manager application operating in user mode which provides an application access to the device through a common control library (CCL). The CCL library is directed to significantly simplify writing of application and service objects for unsupported devices, improve compatibility and quality of the products, and reduce costs.

According to one embodiment of the invention, the taxonomy for retail devices as defined within the Unified Point of Service (UPOS) V1.8 specification is followed. The UPOS V1.8 specification may be obtained from the National Retail Federation's website (www.nrf-arts.org). Some of the retail devices supported by UPOS include: a bump bar; cash changer; cash drawer; credit authorization terminal; coin dispenser; fiscal printer; hard totals; keylock; bar code scanner; tone indicator; motion detectors; line display; magnetic ink character recognition reader; magnetic stripe reader; PIN pad; point card; POS keyboard; POS printer; remote order display; scale; signature capture; and check image scanners. The present invention is not limited to supporting retail devices. Any device that is not included within the operating system's list of supported PnP devices may be supported.

Throughout the specification, the following terms are defined as follows, unless the context clearly dictates otherwise. The term "OPOS" refers to Ole for Point of Sale or Service. The term "UPOS" refers to the Unified Specification for Point of Sale or Service. The term "POS Class Peripheral" or "OPOS device" refers to the collection of devices that fall into one of 24 different device classes as defined in the UPOS V1.8 specification. The term "device class" is a category of POS devices that share a consistent set of properties, methods, and events. Examples are Cash Drawers and POS Printers. Some devices support more than one device class. For example, some POS Printers include a Cash Drawer. The term "control object (CO)" refers to an object that exposes the set of properties, methods, and events to an application for a specific device class. The term "service object (SO)" refers to an object that is called by a CO and implements the UPOS prescribed functionality for a specific device. A SO can be implemented in any language supported by the CLR including native code. The term "unsupported device" or "non-supported device" refers to any device that is not, by default, supported by the base operating system.

### Illustrative Operating Environment

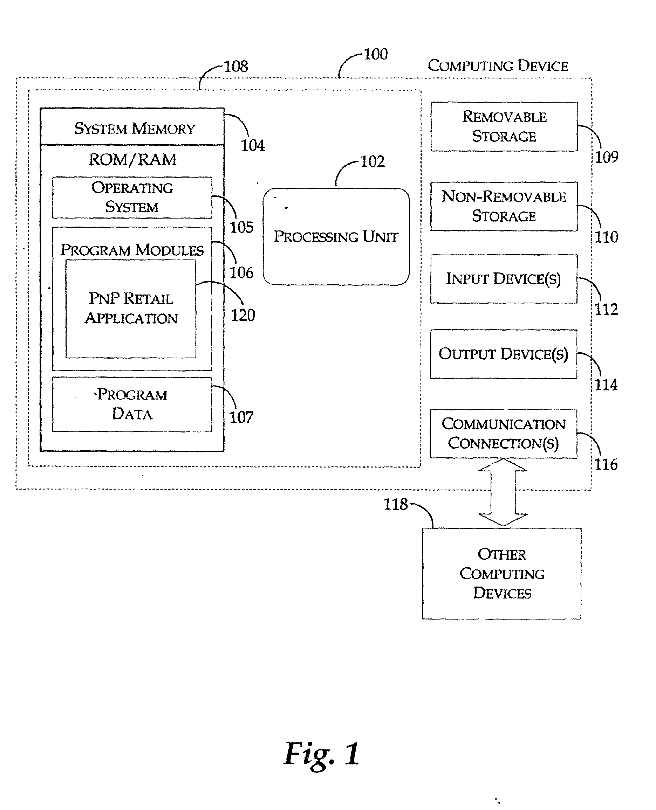

With reference to FIGURE 1 shown below, an exemplary system for implementing the invention includes a computing device, such as computing device 100. In a very basic configuration, computing device 100 typically includes at least one processing unit 102 and system memory 104. Depending on the exact configuration and type of computing device, system memory 104 may be volatile (such as RAM), non-volatile (such as ROM, flash memory, etc.) or some combination of the two. System memory 104 typically includes an operating system 105, one or more program modules 106, and may include program data 107. PnP retail application 120 is directed at providing PnP functionality for retail devices. This basic configuration is illustrated in FIGURE 1 by those components within dashed line 108.

Computing device 100 may have additional features or functionality. For example, computing device 100 may also include additional data storage devices (removable and/or non-removable) such as, for example, magnetic disks, optical disks, or tape. Such additional storage is illustrated in FIGURE 1 by removable storage 109 and non-removable storage 110. Computer storage media may include volatile and nonvolatile, removable and non-removable media implemented in any method or technology for storage of information, such as computer readable instructions, data structures, program modules, or other data. System memory 104, removable storage 109 and non-removable storage 110 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 100. Any such computer storage media may be part of device 100. Computing device 100 may also have input device(s) 112 such as retail devices, keyboard, mouse, pen, voice input device, touch input device, etc. Output device(s) 114 such as a display, speakers, printer, etc. may also be included.

Computing device 100 also contains communication connections 116 that allow the device to communicate with other computing devices 118, such as over a network. Communication connections 116 are one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Plug and Play (PnP) for Retail Devices

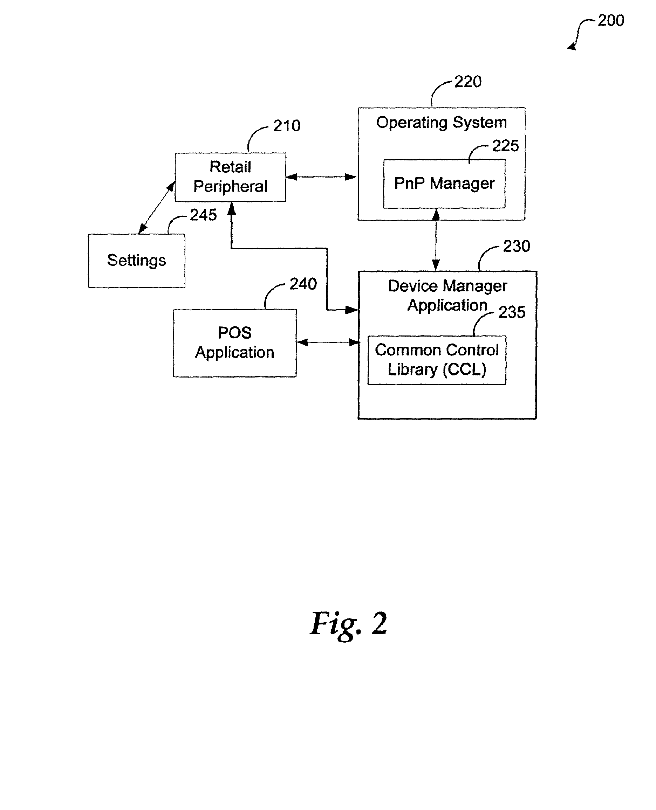

FIGURE 2 illustrates a general system diagram of PnP retail system, in accordance with aspects of the present invention.

PnP support for the retail devices simplifies the task of installation and maintenance of the POS devices. For example, end users are able to simply unplug a POS device and plug in a new one without needing to reboot or reconfigure their machines to interact with the new device.

Generally, when a user installs an unsupported device, such as retail device 210, the installation is detected as a PnP event by operating system 220. Operating system 220, however, does not install the retail device since it is unsupported and the operating system does not have knowledge necessary to install the device. Upon the PnP event, PnP manager 225 sends the event to device manager application 230. Since device manager application 230 resides in the user-mode, as compared to the kernel mode of the operating system, device manager 230 may be modified without altering the operating system. Upon initialization, device manager 230 registers to receive PnP events, as well as other I/O events, from the operating system.

The PnP event delivered by operating system 220 to device manager application 230 includes a device ID for the device that was installed. Device manager 230 attempts to identify the device from the received device ID. When the device is supported by device manager 230, the device ID provides a map to the installation INF file that describes the components, the registry settings, and similar configuration options associated with the device. According to one embodiment, configuration settings associated with the device are stored in a settings file (245). According to one embodiment, the configuration file is stored as XML which includes the instructions for how the device should be configured. Configuration in this context means the identification of what service objects (SOs) are mapped to which devices. Information included in the XML file includes items such as: device ID; device class; IHV name; SO name; SO GUID; special properties of the device (port speed, multi-headed devices, etc.); entry point to launch UI for device management, and the like. The last known state of the device as part of the device configuration may also be saved. The last known state may be useful in debugging a device.

According to one embodiment of the invention, a template INF file is provided for each of the supported device classes as part of a Software Development Kit (SDK). The purpose of the template INF file is to identify the standard registry and configuration elements necessary to support the common control library (CCL). When device manager application 230 recognizes the unmanaged device as a retail device CCL 235 is exposed to the POS application (240) interested in retail device 210.

Upon receiving the event from the operating system and identifying the device, device manager application 230 automatically updates the registry and related configuration entries and installs the support binaries for the device without user intervention based on the associated INF file. POS application 240 may then access functions within CCL 235 to access retail device 210 without having to know the specifics of accessing the particular device.

CCL 235 is directed at providing applications with properties, methods, and events associated with supported devices. According to one embodiment, CCL 235 exposes UPOS properties, methods and events as managed code for each of the supported device classes as specified in the UPOS Version 1.8 specification through a .NET class library. Other devices may also be supported. Generally, any device that is not supported by the operating system's PnP system may be supported in user mode code through device manager application 230.

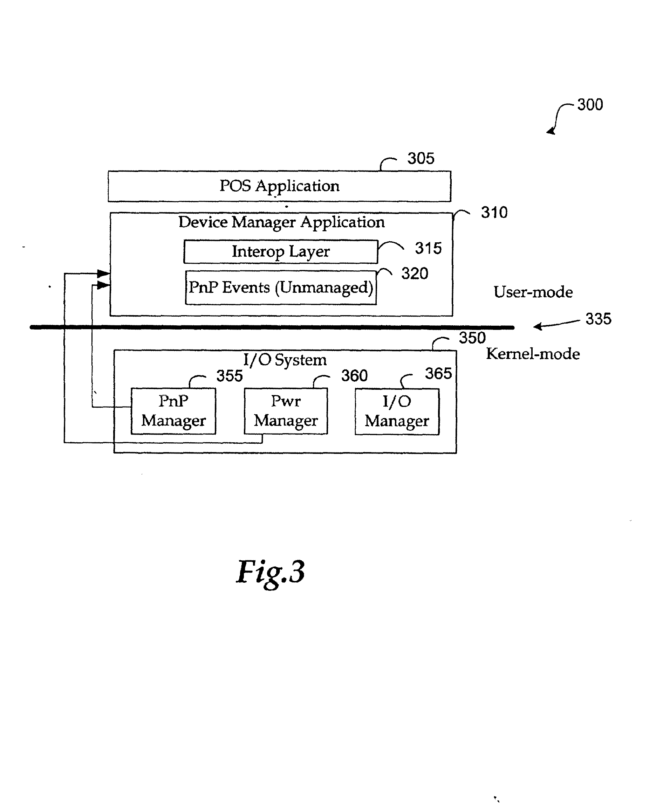

FIGURE 3 illustrates a high level architecture diagram for the PnP system, in accordance with aspects of the invention. As illustrated, the architecture diagram includes functionality provided by the operating system in kernel-mode (below line 335) and functionality provided in user-mode (above line 335).

I/O system 350 operates at the kernel mode of an operating system and provides I/O management (365), power management (360) and PnP management (355). I/O manager provides standard I/O management. Power manager 360 sends power events that are not managed by the operating system to device manager application 310. PnP manager 355 detects PnP events and provides the events to device manager application 310. PnP events manager 320 determines what events are related to the devices supported by device manager 310 and provides POS application 305 with whatever events it has registered to receive.

Interoperability layer 315 is used to enable legacy COM based retail devices to be able to be used by applications targeting the CCL. In other words, interoperability layer 315 is directed at providing POS application 305 a unified way of accessing both PnP devices and legacy devices using the same methods. Legacy OPOS devices generally store information about themselves, identify the communication path, and to persist configuration data. For example, a system registry may be used to store this information. Typically, each device manufacturer would provide a custom application to manage the configuration of the device.

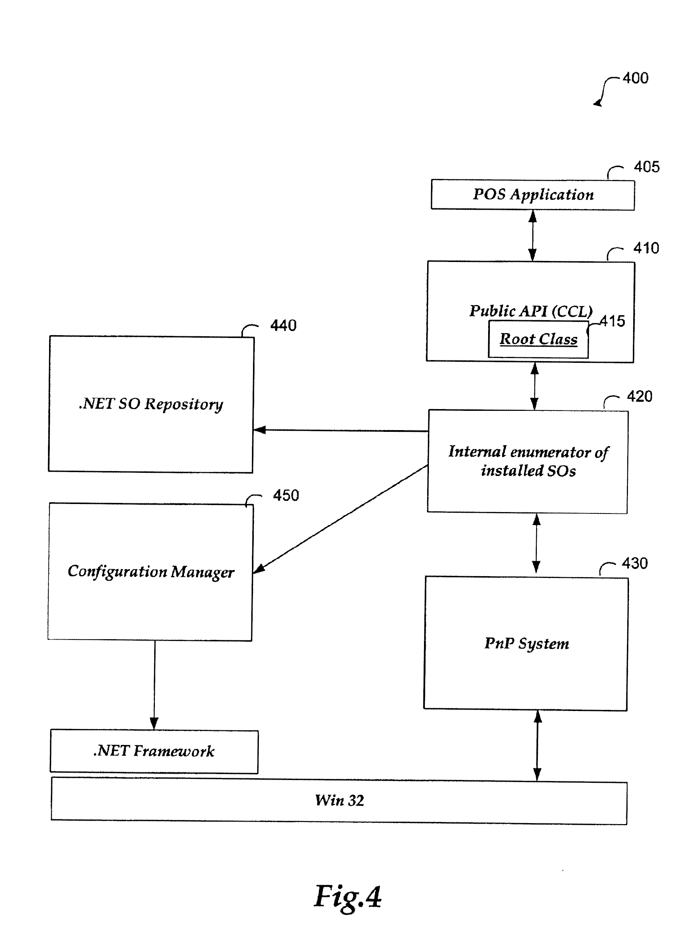

FIGURE 4 illustrates interaction between the PnP system and the CCL, in accordance with aspects of the present invention. As illustrated, system 400 includes POS application 405, public API (CCL) 415, enumerator 420, PnP System 430, SO repository 440, configuration manager 450, and a .NET framework and Win 32 level.

POS application 405 interacts with API 410 to interact with the devices supported by the CCL. API 410 provides POS application 405 with the PnP events the application registered to receive.

Root class 415 is exposed within public API 410 and serves as a single entry point for all operations. API 410 provides applications, such as POS application 405, with the ability to enumerate installed POS devices, instantiate service objects for them, and receive Plug-n-Play events when a POS device is connected or disconnected.

According to one embodiment, root class 415 exposes the following methods: GetDevices() which returns a collection of all POS devices installed on the machine; GetDevices(string type) which returns a collection of POS devices of the given type installed on the machine; GetDefaultDevice(string type) which returns IDevice interface for default device of the given type; and OpenControl(IDevice device ) which returns an instance (IPOSControl interface) of the requested service object.

Root class 415 also exposes two Plug-n-Play events to POS application 510: OnDeviceAdded and OnDeviceRemoved that are fired when a POS device is connected/disconnected to/from the machine.

OPOS defines five events that service objects fire: OnDataEvent; OnDirectIOEvent; OnErrorEvent; OnOutputCompleteEvent; and OnStatusUpdateEvent. Different device classes fire, all, none or a subset of the events. The events are added to the IPOSControl interface. SOs for device classes that per OPOS standard don't support some or all of the events simply won't fire them.

The root class also detects what service objects are installed on the machine, and presents that information to applications via enumerators returned by the internal enumerator of installed SOs (420). Root class 410 integrates with the operating system's Plug-n-Play system 430 through block 420 to determine by hardware IDs if a physical device supported by installed service object is currently connected/turned on.

Block 420 scans the .NET SO repository 440 for .NET service objects. According to one embodiment, block 420 scans the directories specified in the HKLM\SOFTWARE\OLEforRetail.NET\ControlAssemblies registry key. The key may contain multiple string values: one per directory to scan..NET SOs are dll assemblies with special custom attributes. Every service object class in an SO assembly has a POSServiceObject attribute that specifies device class, name, description, and version of the service object. Example:
[PtJSServiceObjectAttribute("MSR", "CommonMSR", "Common service object for magnetic stripe reader", "1.0.0")]

Configuration manager 550 reads the configuration files and for: the mapping of PnP hardware IDs to legacy SOs; extensions to .NET SO metadata; mapping of non-PnP devices to SOs; disabled devices; and security settings.

There may be one or more POSHardwareId attributes that map hardware IDs of physical devices to the SO. The IDs are hardware ids also used by its Plug-n-Play subsystem. Hardware ids are defined in ranges by specifying lower and higher ids of the range. Example: [POSHardwareId("USB\Vid_05d9&Pid_a794&Rev_0000"," USB\Vid_05d9&Pid_a794&Rev_9999")]

According to one embodiment, for legacy service objects root class 415 reads the HKLM\SOFTWARE\OLEforRetail\ServiceOPOS registry key. Names and Programmatic IDs of all registered OPOS service objects are defined under the key grouped by device types. Hardware ids for legacy SOs are defined by configuration XML files that are put into a special folder.

As discussed above, according to one embodiment, the CCL exposes UPOS V1.8 properties, methods and events as managed code for each of the supported device classes as defined in the UPOS specification to POS application.

CCL 410 is a collection of assemblies that represents a Control Object (CO) for each device class. The CCL provides an application interface to an application, such as the Point of Sale application. The Service Object implements the APIs and support a device of the CO's class. The following is an exemplary list of standard properties, methods, and events.

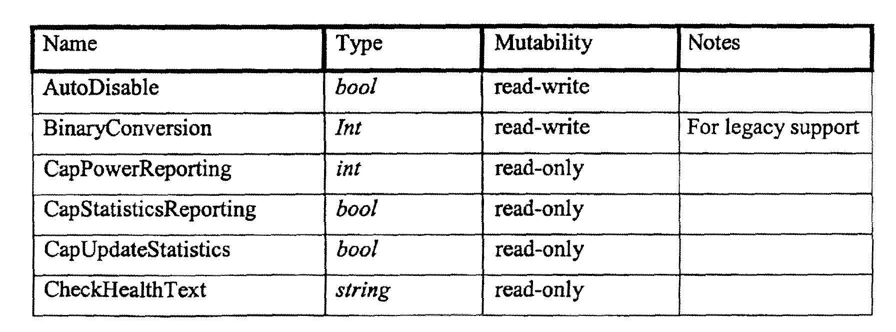

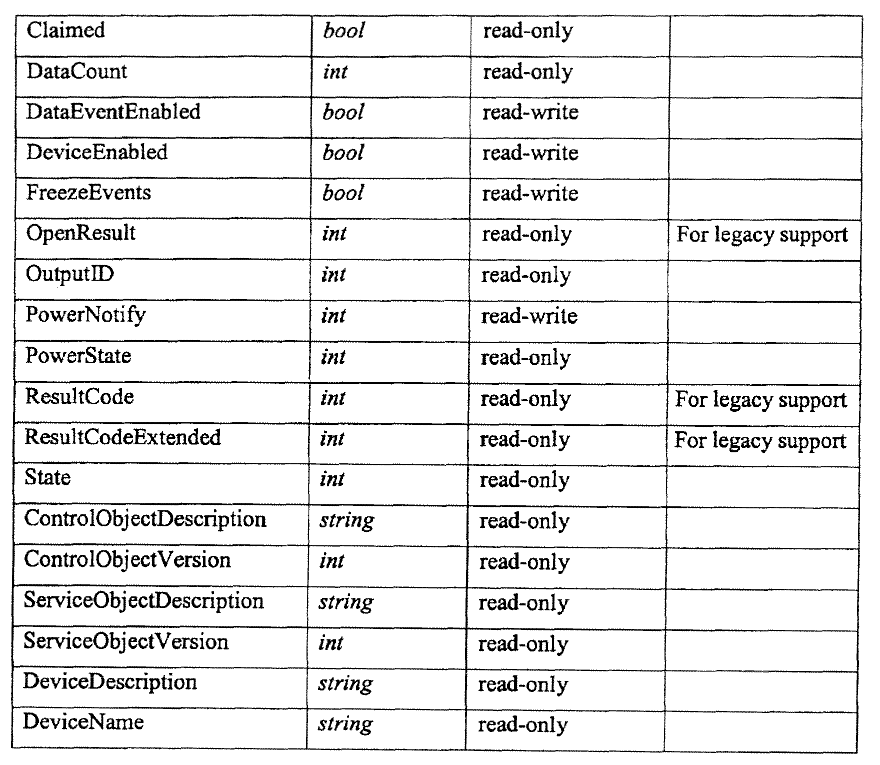

According to one embodiment, the UPOS V1.8 constants are implemented and the taxonomy and naming conventions as established by UPOS are followed. According to one embodiment, the CCL exposes UPOS events in the form of .NET delegates. In addition, the library exposes PnP events related to POS devices.

The CCL defines interfaces and their device class names. The library also allows additional device classes to be defined.

The *IPhysicalDevice* interface exposes several properties about the specific device that is being attached or removed such as: its install state, POS device class, full device path, description and hardware Id. This information gives the application the context it needs to be able to make decision about how to handle the event.

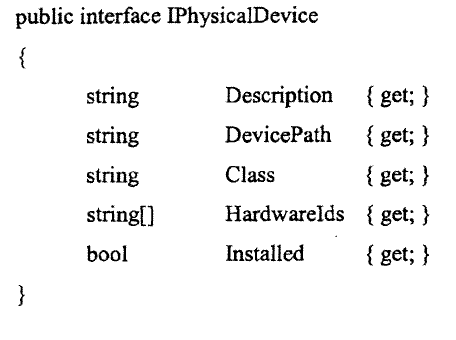

PnP support is implemented in the *PhysicalDeviceInfo* class. According to one embodiment the *PhysicalDeviceInfo* class is a managed class that inherits from *System.Windows.Forms.Form.* The *PhysicalDeviceInfo* class inherits from **.Form* because native operating system events are exposed to applications via window messages and **.Form* wraps a native window. The native window is used to capture PnP events from the OS and is not displayed.

When the *PhysicalDeviceInfo* class is instantiated it registers for PnP events from all device interface classes so it exposes events when any device that supports PnP is added or removed from the system (including non-POS devices). The *PhysicalDeviceInfo* class also builds an internal list of all devices that are currently known by the system and determines which ones are currently attached and enabled. This class also contains helper methods that are used by CCO.Net during device enumeration to return the complete list of devices and to query specific devices for their current install state. Device enumeration and device information is done via native API calls which are made with P-Invoke style interop into the Win32 APIs.

The *PhysicalDeviceInfo* class exposes native operating system PnP events to the root CCO.Net class as events. These events return *PhysicalDevice* objects that implement the *IPhysicalDevice* interface. The *PhysicalDevice* class is a class the represents a single device and exposes several properties about the device such as its hardware Id, description, etc. This is the same object that eventually gets bubbled up the application.

### Accessing Methods and Properties

An application, such as POS application 405, desiring to access a device supported by the library should first open the device before invoking other methods. According to one embodiment, attempting to invoke a method before successfully opening a device causes an OPOSClosedException to occur. An application accessing an exclusive-use devices require should claim and enable the device before invoking most of the methods. An application accessing a sharable device should enable the device before attempting to invoke most of the methods. Before successfully opening a device, the values of most properties associated with the device are not initialized. After properties have been initialized for a device, subsequent claims and enables to the device do not re-initialize the properties. The properties remain initialized until the device is closed.

Data received by the device manager application is queued as a DataEvent. If the AutoDisable property is set to TRUE when the data is received, then the control automatically disables itself setting the DeviceEnabled property to FALSE. This inhibits the Control from queuing further input and, when possible, physically disabling the device.

When the application is ready to receive input from the device, it sets the DataEventEnabled property to TRUE. Then, when input is received (usually as a result of a hardware interrupt), the control queues and delivers a DataEvent to the applications that have requested the event. If data has already been queued, the DataEvent will be delivered. This event may include input status information through a numeric parameter. The Control places the input data plus other information as needed into device specific properties just before the event is fired.

Just before delivering the event, the Control disables further data events by setting the DataEventEnabled property to FALSE. This causes subsequent input data to be queued by the Control while the application processes the current input and associated properties. When the application has finished the current input and is ready for more data, it re-enables events by setting DataEventEnabled to TRUE.

If the input device is an exclusive-use device, the application claims and enables the device before the device begins reading input. For sharable input devices, one or more applications may open and enable the device before the device begins reading input. An application calls the ClaimDevice method to request exclusive access to the device before the Control sends data to it using the DataEvent. If event-driven input is received, but no application has claimed the device, then the input is buffered until an application claims the device (and the DataEventEnabled property is TRUE). This behavior allows orderly sharing of the device between multiple applications, effectively passing the input focus between them.

If the Control encounters an error while gathering or processing event-driven input, then the Control changes its state to Error, and queues one or two ErrorEvents to alert the application of the error condition. This event (or events) is not delivered until the DataEventEnabled property is TRUE, so that orderly application sequencing occurs. According to one embodiment, error events and exceptions are delivered with the following loci:

InputWithData (OPOS_EL_INPUT_DATA) -queued if the error occurred while one or more DataEvents are queued. It is queued ahead of all DataEvents. A typical implementation would place it at the head of the event queue. This event provides the application with the ability to immediately clear the input, or to optionally alert the user to the error and process the buffered input. The latter case may be useful with a Scanner Control: the user can be immediately alerted to the error so that no further items are scanned until the error is resolved. Any previously scanned items can then be successfully processed before error recovery is performed.

InputNoData (OPOS_EL_INPUT) - Delivered when an error has occurred and there is no data available. A typical implementation would place it at the tail of the event queue. If some input data was already queued when the error occurred, then an ErrorEvent with the locus "InputWithData" was queued and delivered first, and then this error event is delivered after all DataEvents have been fired. If an "InputWithData" event was delivered and the application event handler responded with a "Clear", then this "InputNoData" event is not delivered.

The Control exits the Error state when one of the following occurs: (1) the application returns from the InputNoData ErrorEvent; (2) the application returns from the InputWithData ErrorEvent with OPOS_ER_CLEAR; and (3) the application calls the ClearInput method.

For some Controls, the application calls a method to begin event driven input. After the input is received by the Control, then typically no additional input will be received until the method is called again to reinitiate input. Examples include MICR and Signature Capture devices. This variation of event driven input is sometimes called "asynchronous input."

The DataCount property may be read to obtain the number of DataEvents queued by the Control. All input queued by a Control may be deleted by calling the ClearInput method. ClearInput may be called after Open for sharable devices and after ClaimDevice for exclusive-use devices.

The general event-driven input model does not rule out the definition of device classes containing methods or properties that return input data directly. Some device classes will define such methods and properties in order to operate in a more intuitive or flexible manner. An example is the Keylock device. This type of input is sometimes called "synchronous input."

### Outputs

The OPOS output model consists of synchronous and asynchronous output. A device class may support one or both types, or neither type.

### Synchronous Output

Synchronous output is preferred when device output can be performed quickly. Its merit is simplicity. The application calls a class-specific method to perform output. The Control does not return until the output is completed. When errors occur during this type of output, an OPOSException is thrown.

### Asynchronous Outputs

Asynchronous output is performed on a first-in first-out basis. This type of output is preferred when the device output requires slow hardware interactions. Its merit is perceived responsiveness, since the application can perform other work while the device is performing the output. The application calls a class-specific method to start the output. The Control buffers the request in program memory, for delivery to the Physical Device as soon as the Physical Device can receive and process it, sets the OutputID property to an identifier for this request, and returns as soon as possible. When the device completes the request successfully, OPOS fires an OutputCompleteEvent. A parameter of this event contains the OutputID of the completed request.

If an error occurs while performing an asynchronous request, an ErrorEvent is fired. The application's event handler can either retry the outstanding output or clear it. The Control is in the Error state while the ErrorEvent is in progress.

All buffered output data, including all asynchronous output, may be deleted by calling ClearOutput. OutputCompleteEvents will not be fired for cleared output. This method also stops any output that may be in progress (when possible).

### Error Handling

Error handling in the library is implemented via exceptions. The errors are based on the HRESULT codes (ResultCode and ResultCodeExtended values) as defined in the UPOS V1.8 specification. The POSException class derives from System.ApplicationException and is a base exception class. This class also defines constants for OPOS error codes. POSControlException derives from POSException and is thrown by service objects. POSLibraryException also derives from POSException and is thrown by the library.

According to one embodiment, error handling is derived from System.ApplicationException. This derived class implements the ResultCode and ResultCodeExtended properties from the UPOS specification.

### Security

The CCL, Plug and Play feature, and device enumeration feature uses role based security for access to service objects. Device management includes the requirements for the UI and related configuration of roles related to service objects.

A helper class is exposed that enumerates connected and configured devices attached to the system. This class exposes public methods to allow the application developer to query the CCL to determine what devices are accessible. This enumeration class also includes the ability to query for Device Statistics (as defined in the UPOS V1.8 specification).

To simplify security for Service Object developers and retailers, additional user types are added including: Owner; Integrator; Manager; and Cashier. By default, an owner is a member of the administrator group, an integrator and manager are power users, and a cashier is a user.

Attempting to access a control without the appropriate role privileges throws an "Access not authorized" exception. A standard error message is identified that the error has occurred. There should be an option to not display the standard error message if the application is handling the message. The standard message should not be prevented if role based security is used and the application does not handle this error.

According to one embodiment, the CCL exposes an enumerator of available POS devices grouped by UPOS device class. The library serves as a factory for instantiating instances of service objects. It decouple writers of POS applications from implementation of specific service objects and is a single entry point for applications for interacting with POS devices.

According to one embodiment, errors are reported in the standard .NET way (by means of exceptions). Library exceptions have logical inheritance hierarchy. The standard OPOS error codes are used where it is possible and makes sense.

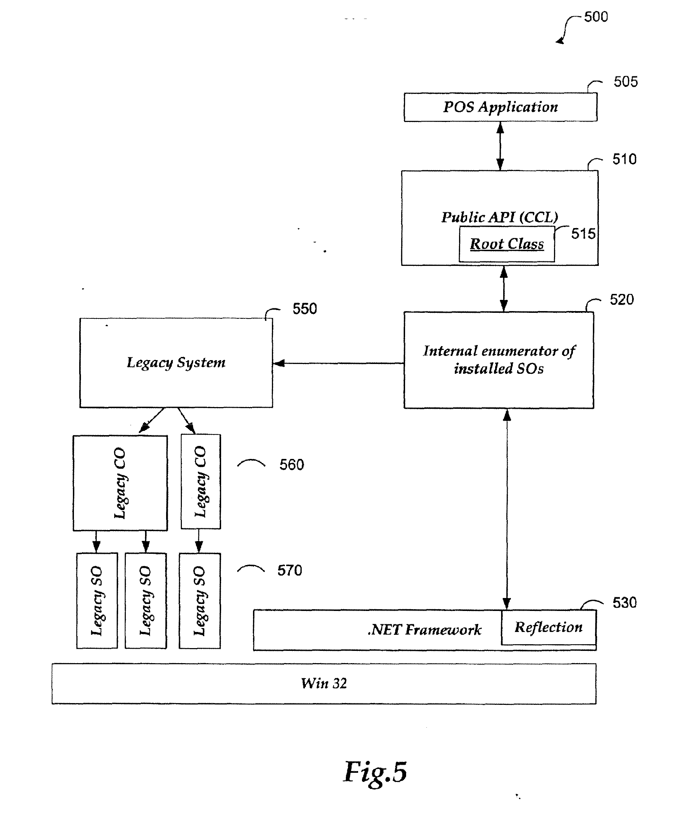

FIGURE 5 illustrates an architecture for integrating legacy devices with the PnP retail system, in accordance with aspects of the present invention.

CCL 510 wraps COM-based SOs with a managed proxy class. The proxy instantiates SO's control object via reflection 530 and relays application calls to it. The proxy does not directly talk to the actual SO (570). Instead it communicates with its CO (560).

The *LegacyProxy* class is a universal base class for all legacy proxies. The *LegacyProxy* class implements interfaces for the 24 currently supported OPOS devices classes (ICashDrawer, IMSR, IPOSPrinter, etc.) so that instances of it can be cast to any one of the interfaces. Essentially, *LegacyProxy* is a superset of all OPOS controls. *LegacyProxy* talks to a CO via standard .NET-COM interop layer that takes care of all plumbing and uses IDispatch for actual communication. Since IDispatch invokes properties and methods by names, the LegacyProxy class is able to expose the properties and methods as long as the underlying CO implements them.

According to one embodiment, events coming from legacy controls are hooked up by means of UCOMIConnectionPointContainer and UCOMIConnectionPoint interfaces from System.Runtime.InteropServices namespace. Event handlers can be set by UCOMIConnectionPoint if the event receiver class (LegacyProxy) implements the specific event sink interface of the legacy control. Even though there are just five standard OPOS events, event sink interfaces are all different for all control objects (they have different interface guids). Instead of instantiating LegacyProxy class for every instance of a legacy control object, a dynamic in-memory class derived from LegacyProxy that additionally implements the event sink interface that the CO expects is generated. The GUID of the interface is retrieved from the event connection point of the legacy CO instance (via UCOMIConnectionPoint). The generated class relays calls to event handlers down to the LegacyProxy class that translates and fires them to application.
1. Application calls Root.OpenControl for a legacy OPOS control.
2. Root.OpenControl calls AssemblyFinder.OpenControl.
3. AssemblyFinder.OpenControl understands that the request is for a legacy control and calls AssemblyFinder.GenerateLegacyProxy.
4. AssemblyFinder.GenerateLegacyProxy instantiates the COM class and then uses UCOMIConnectionPointContainer and UCOMIConnectionPoint to get guid of the connection point (event sink) interface.
5. AssemblyFinder.GenerateLegacyProxy calls AssemblyFinder.EmitProxy to generate an in-memory proxy class that implements an interface with the event sink guid.
6. Application opens the proxy by calling Open on it.
7. Inside the Open method, among other things, LegacyProxy (parent class of the generated proxy) calls UCOMIConnectionPoint.Advise to set the instance as event handler.

### Support for POS applications

### OPOS.NET API

The CCL consists of three core assemblies: (1) POS.Interfaces.d11 which defines interfaces, enums, and constants and will be referenced by both SOs and applications; (2) POS.d11 contains POS.Root class which lets applications (ISV) enumerate and instantiate service objects for installed POS devices; and (3) GenericServiceObject.d11 is a base class for a service object. Writers of service objects (IHV) will be encouraged to derive from it and leverage its default implementation of basic SO functionality like event queue, global claim, etc.

Since the three assemblies will be referred from multiple places on the POS machine hard drive, the assemblies to the Global Assembly Cache are installed. This helps to ensure that only one copy of the binaries is used across the machine and that the binaries can be serviced in one centralized place.

### Service object interfaces

Several interfaces have been defined for the purpose of creating managed Service Objects. These interfaces encapsulate the POS 1.8 specification and are divided into two categories: (1) device class independent interfaces that model common POS functionality; and (2) device dependent interfaces that model functionality specific to a given class of devices.

Publicly exposed POS interfaces (common and device dependent ones) are defined in a separate assembly POS.Interfaces.d11. These interfaces are implemented by .NET service objects. Applications cast SO instances received from the CCL to these interfaces to access specific functionality of particular device classes. Base control interfaces are defined in POS.Interface.Basic namespace and have the following hierarchy. IPOSControl is a base interface for .NET service objects. SOs will directly or indirectly implement it. The library uses pointers to this interface for SOs and applications cast it to more specific device dependent interfaces like IMSR, IPOSPrinter, etc. IPOSEventInput extends IPOSControl by adding three properties for SOs for event driven input devices. IPOSAsyncOutput extends IPOSControl by adding OutputID property for SOs for devices that support asynchronous output (like printers).

Device dependent interfaces for standard OPOS device classes are defined in POS.Interfaces.Specific namespace. They derive from one of the above base interfaces and extend them with functionality specific for particular device classes. IHV's should derive from these interfaces when implementing their SO's. Exemplary interfaces are as follows: ICashDrawer for cash drawer; IMSR for magnetic stripe reader; IPOSPrinter for receipt printer; and the like.

The interfaces closely match respective OPOS interfaces. At the same time, in some cases where OPOS deviated from UPOS because of COM limitations, original UPOS interfaces are used. For example, OPOS uses BSTR strings for receiving and sending binary data which causes some complication with binary to ANSI conversion. In the CCL, byte arrays are used for binary data.

As an example, the following is how OPOS and Library interfaces for MSR (magnetic stripe reader) look.

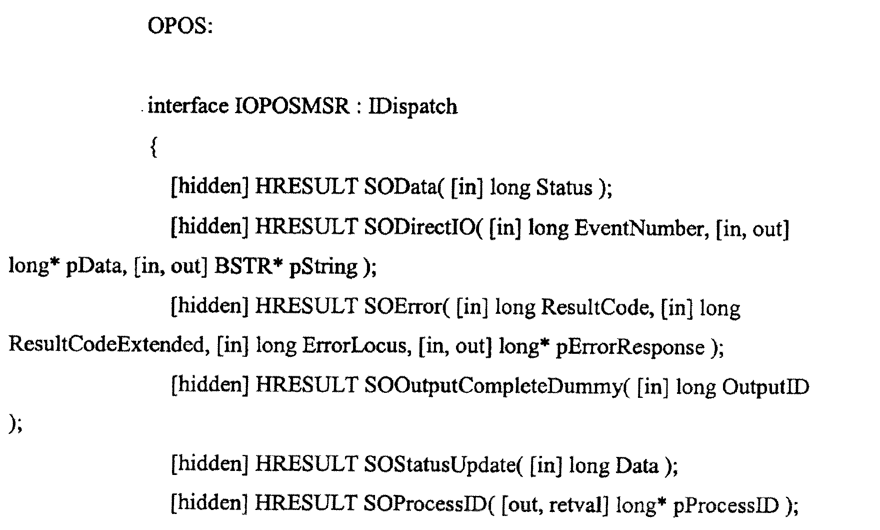

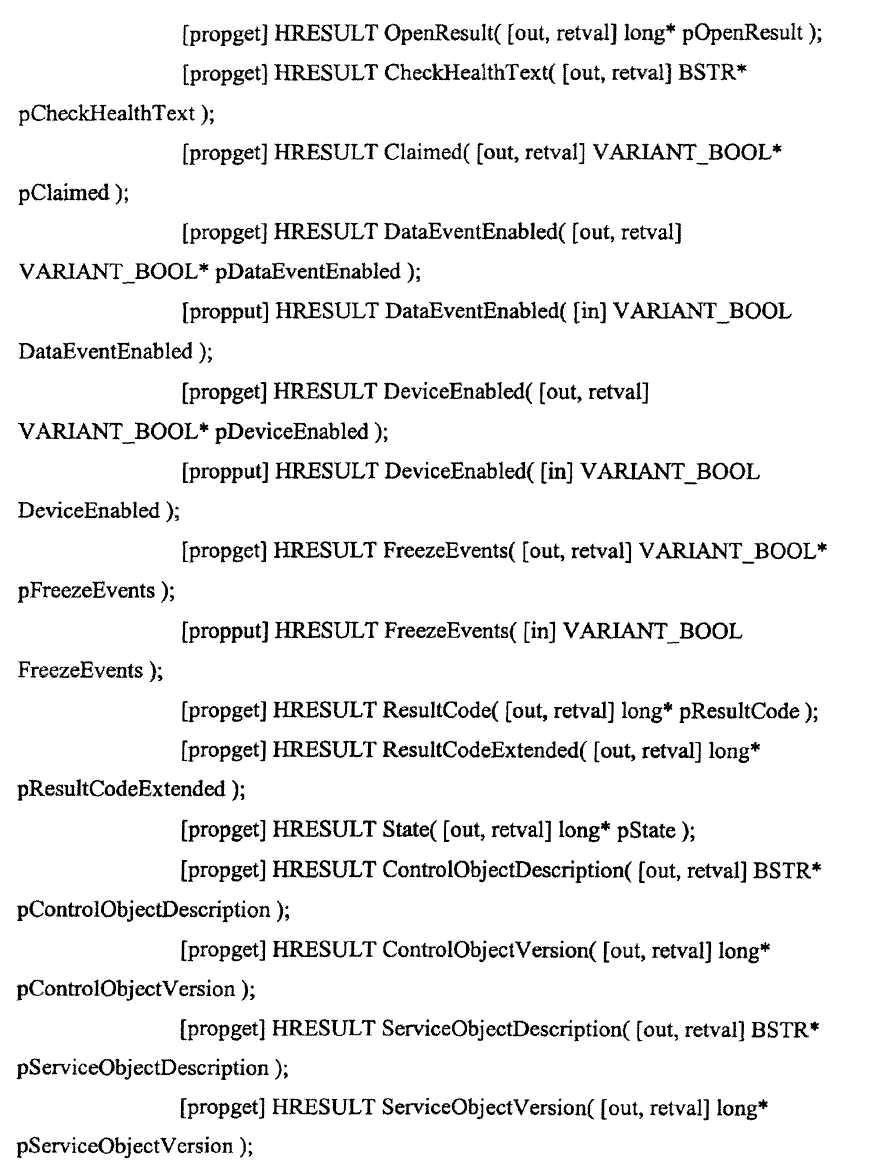

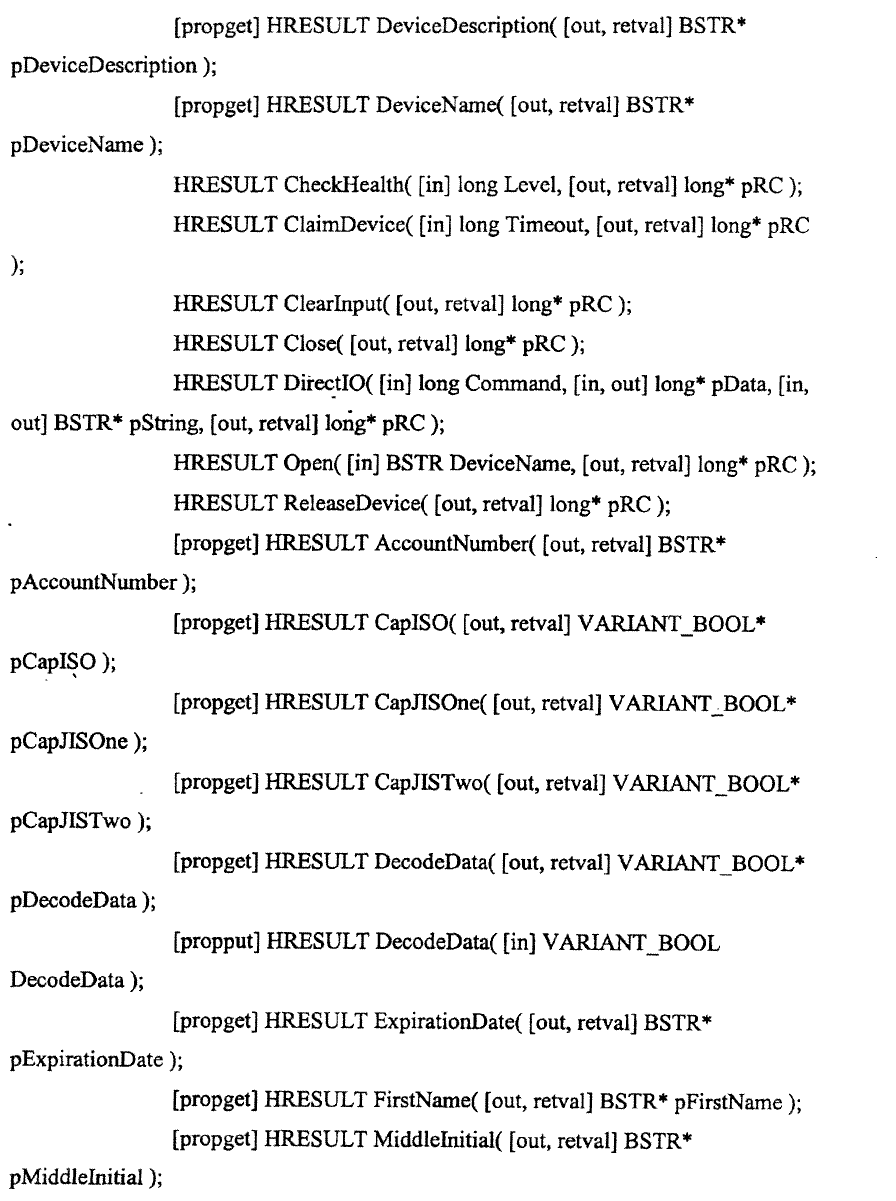

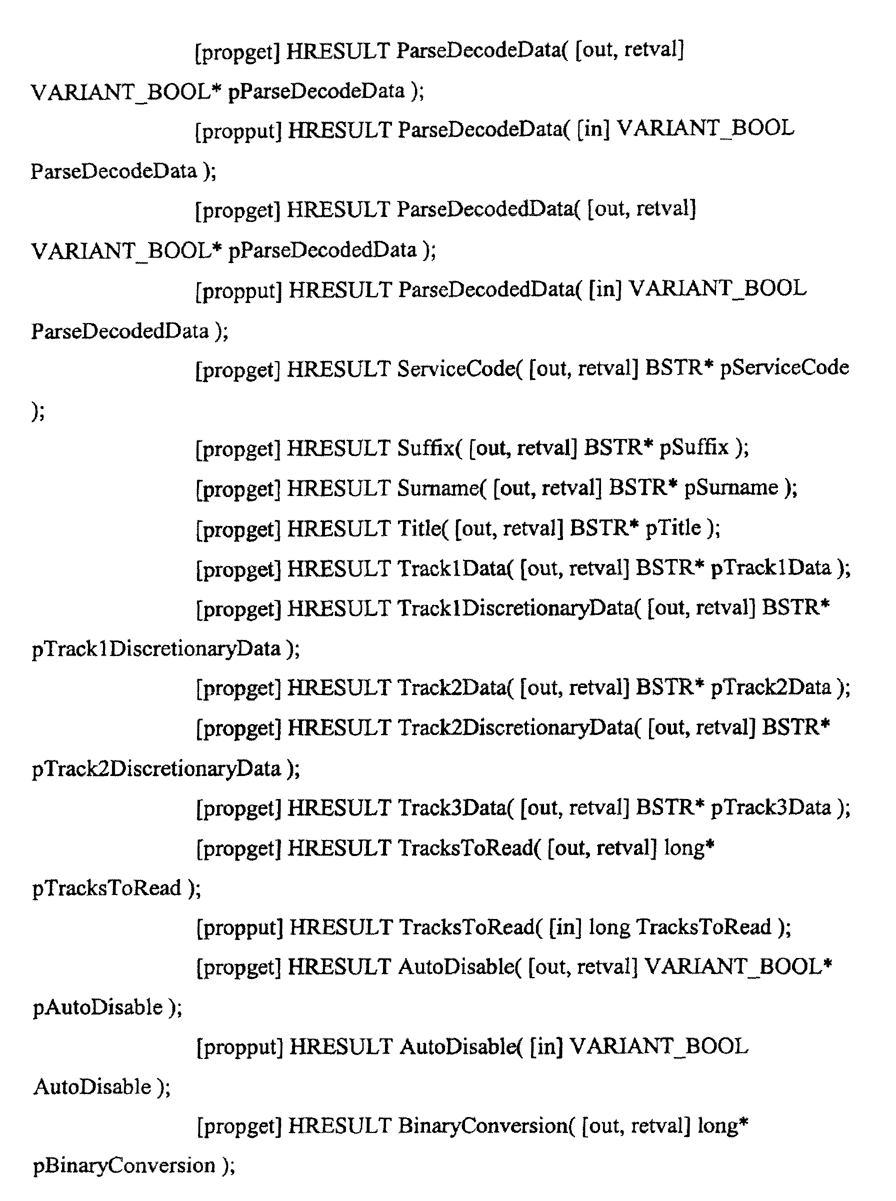

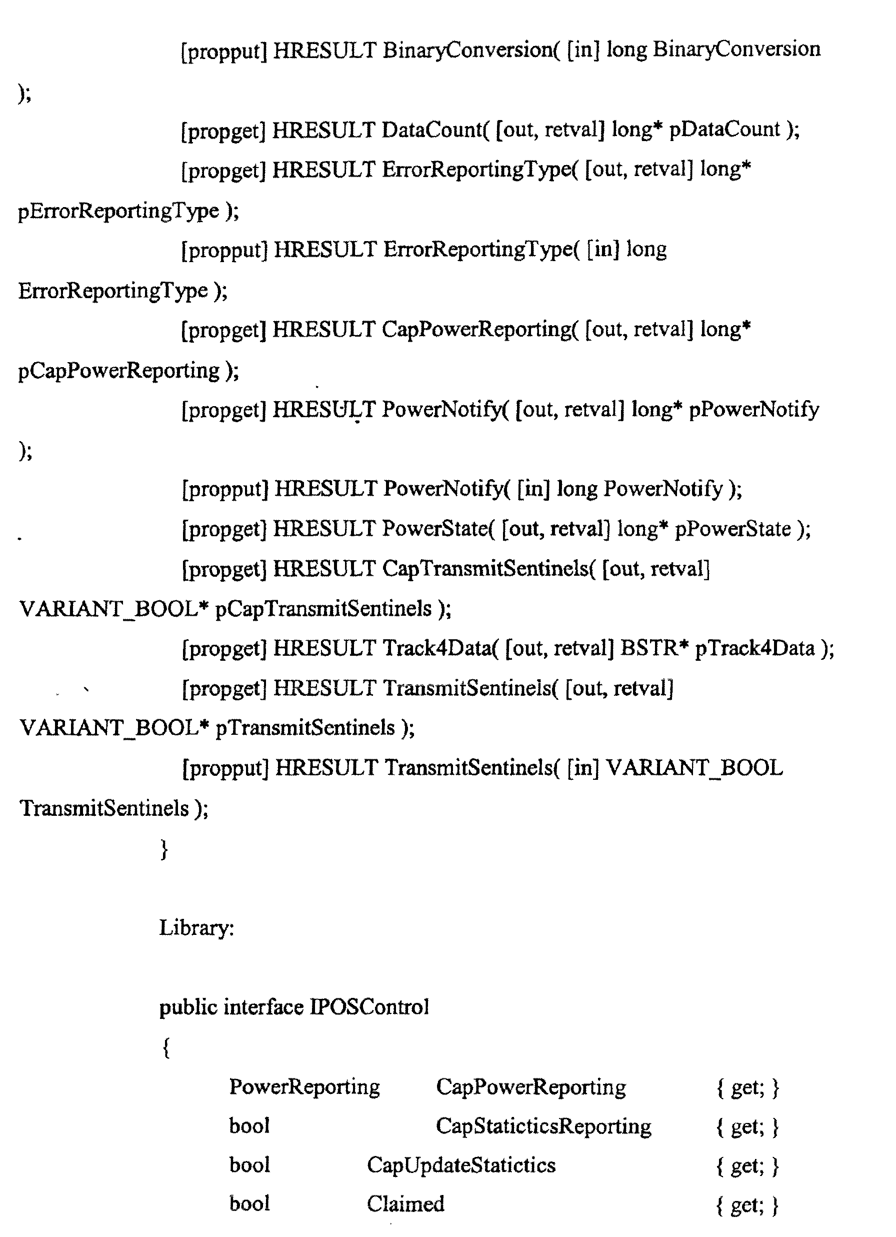

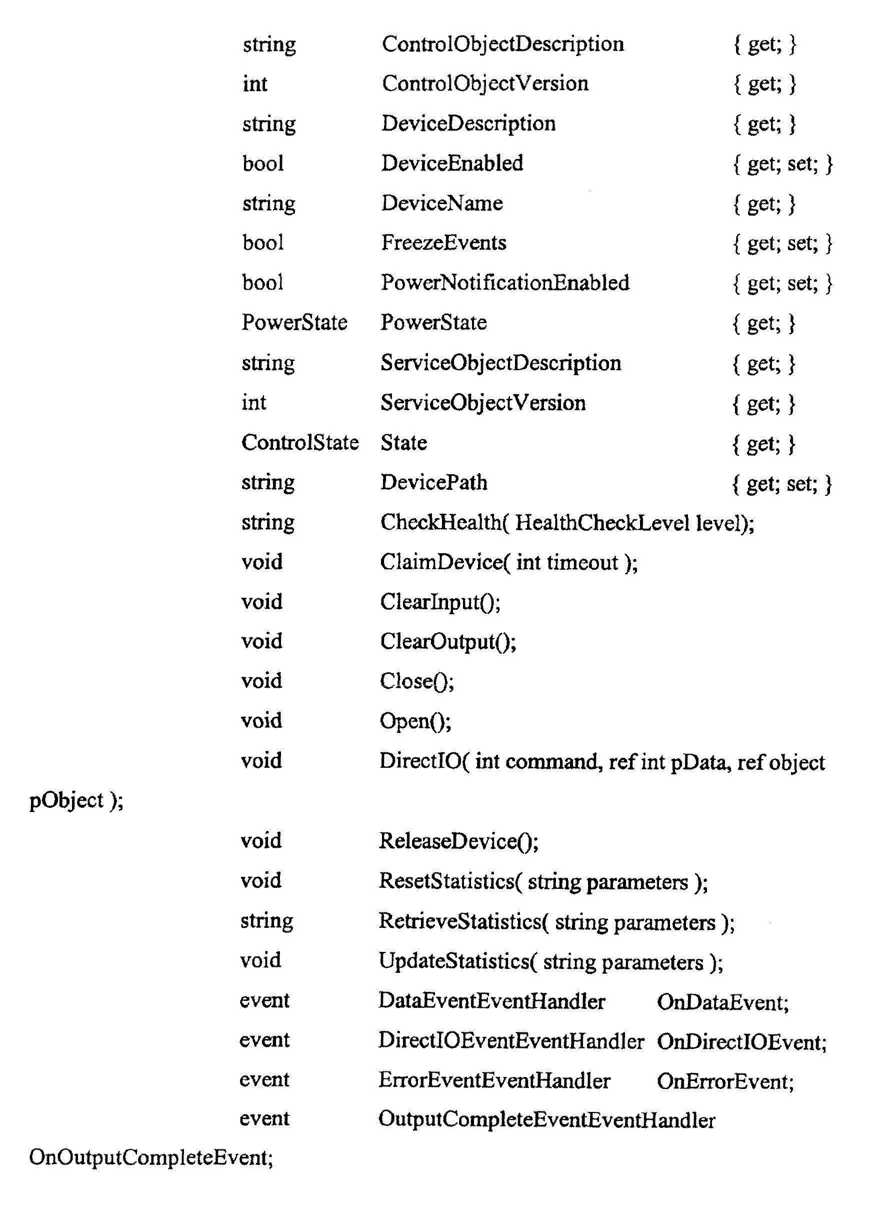

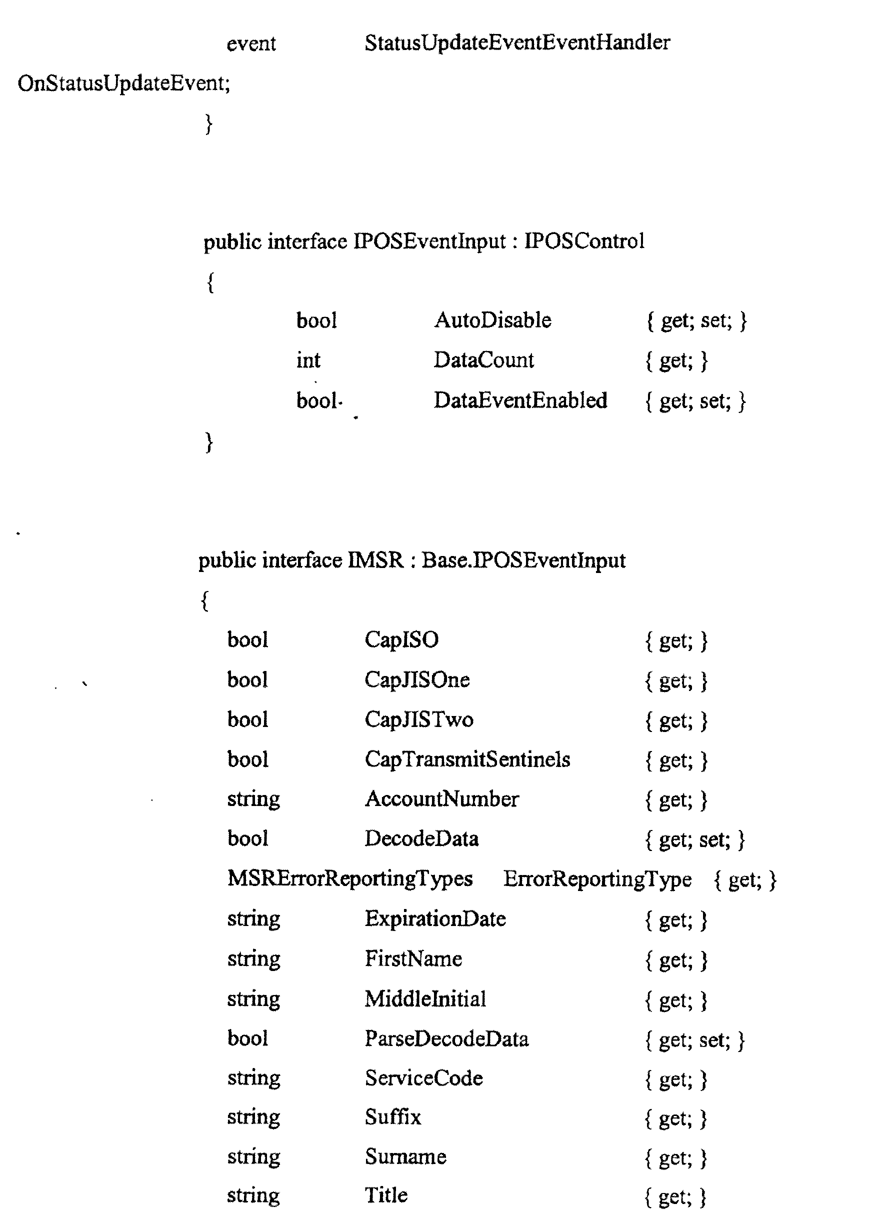

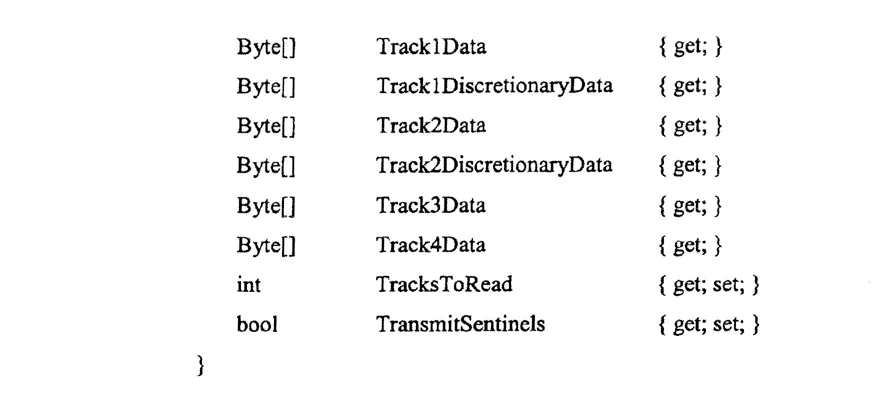

The interfaces have IPOSControl as their parent/grandparent, so any SO can be cast to IPOSControl interface. The library classes operate with IPOSContcol interfaces and applications cast instances af SOs to the device specific interfaces. That allows introducing new device classes without changing the library. As long as the new device class interface is derived from IPOSControl, the library will be able to handle SO instances for the new device class.

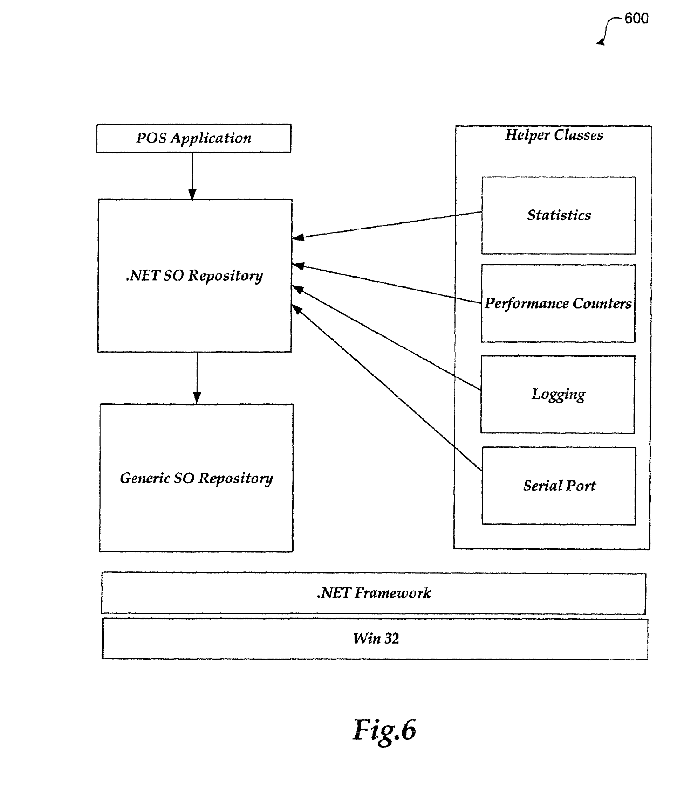

FIGURE 6 shows exemplary helper classes and SO repositories, in accordance with aspects of the invention.

Hardware vendors typically implement a device dependent Service Object (SO) that implements an interface as described in the POS specification and talks directly with their hardware. The CCO.Net library includes several technologies that ease the burden to produce high quality implementations of SO's, including: support for writing Service Objects in managed code; a generic implementation of the POS features common to most service objects. This includes infrastructure for device claiming/enabling, eventing, queuing of messages, statistics, etc. IHV's can leverage this object to relieve much of the burden of implementing the POS specific aspects of SO's allowing them to concentrate on the device specific details; and a set of helper classes for performance counters, device statistics, etc.

According to one embodiment, service objects are written as .Net assemblies. These assemblies derive from the IPOSControl interface or one of the device specific interfaces defined which derive from IPOSControl. These assemblies include assembly-level and class-level attributes that describe the device class(es), POS versions and the hardware Id(s) of the supported devices. The CCO.Net library uses these attributes to determine which of the device classes the SO implements and what hardware it controls. By using assembly attributes installation of SOs is greatly simplified because all that needs to be done is to copy the assembly into a directory where the CCO.Net can find it.

The Generic service object class is an abstract base class that implements the default functionality required by service objects of all device classes. The typical scenario would be for IHV's to derive from the generic service object and one of the device specific interfaces. By doing this IHV's can rely on the generic service object to handle many of the POS specific details and can concentrate their efforts on the device specific aspects of the SO.

The generic service object class contains a default implementation for all of the methods and properties on the *IPOSControl* interface. This includes a mechanism for event queuing and delivery, device state management (claiming, enabling, etc.) and state reporting. Since this is an abstract class it cannot be directly instantiated and is intended solely for IHV's to derive their SO's from. All methods and properties are marked as virtual so IHV's can use the default implementations and override any methods that they see fit.

The generic service object implements the details of POS event delivery in the form of an event queue, event queue worker thread and various synchronization objects. At a high level, eventing is handled by the generic service object as follows:
1) Wait until the thread is signaled and the *FreezeEvents* property is *false.*
2) Check to see if the thread is terminating. If so, clear the event queue and end the thread.
3) Remove the next event from the event queue.
4) Call *PreFireEvent(EventArgs posEvent).*
5) Fire the event to the application if *PreFireEvent()* returned *true* in step 4.
6) Goto step 1.

Two helper methods are provided to drive the eventing; *QueueEvent(EventArgs posEvent)* and *PreFireEvent(EventArgs posEvent). QueueEvent(EventArgs* posEvent) is used to add an event to the event queue and signal the event thread that a new event has arrived. *PreFireEvent(EventArgs posEvent)* is called by the generic SO immediately before an event is fired. It is provided to give the SO a chance to update its internal state prior to a particular event being fired.

The event queuing data structures are created and initialized when the *Open()* method is called. The *Close()* method releases the device, terminates the event thread and cleans up the internal objects. A set of helper classes is provided to help IHV's implement performance counters and device statistics in a simple and consistent manner.

Device statistics can be divided into two categories; (1) device information statistics and (2) device statistics. Device information statistics are properties of the device such as its name, manufacturer, version, etc. Device statistics typically reflect device usage information such as the number of hours it has been powered on, etc. UPOS 1.8 defines a set of statistics that all devices should support as well and statistics for each device class. UPOS also specifies that devices can support manufacturer specific device statistics.

The *DeviceStatistics* helper class eases the burden of implementing device statistics as defined in the 1.8 version of the UPOS specification. It is included in the *GenericSO* implementation so SO's that derive from the *GenericSO* will need to write only a very minimal amount of code to support statistics. Typically, the only code that customers will need to write is to call the *IncrementStatistic(string Name)* method to increment the value of a given statistic at the appropriate time. The *GenericSO* will take care of the rest of the details.

The *DeviceStatisties* class supports statistics that are stored in either hardware or software. Software based statistics are automatically persisted to an XML file at an application definable interval and are automatically loaded from this file when the device is claimed. *DeviceStatistics* implements each of the 3 methods *(resetStatistics, retrieveStatistics,* and *updateStatistics)* as well as the two properties (*CapStatisticsReporting* and *CapUpdateStatistics*). It also includes public helper methods for creating statistics, incrementing statistics, and loading/saving statistics to disk. To support statistics that are stored in the device itself, a callback function is specified by the SO that returns the value of the statistic. The DeviceStatistics class will call this function each time the client application requests that statistic.

IHVs provide INF file for installing their service objects along with device drivers if necessary. A chosen set of INF files are preinstalled, so that the operating system is able to install them when a new device is attached.

### Installation of service objects

According to one embodiment, .NET service objects are installed by copying their assemblies to a folder specified in HKLM\SOFTWARE\OLEforRetail.NET\ControlAssemblies registry key. Since .NET SOs will have the information necessary for mapping them to physical devices in their assembly metadata, nothing else should be needed for simple cases. All extra settings will be supplied via XML settings files. Examples of the extra settings include items such as: additional hardware ids to be mapped to an existing service object; default service objects for cases when more than one device of a class is connected; and settings for non-Plug-n-Play devices, like serial ports.

As discussed above, global settings are held in an XML configuration file. Per-SO settings are in separate XML files put to a predefined folder. The library reads both the main configuration file and configuration files from the folder when enumerating installed service objects.

IHVs have inf files for their devices that both install their drivers and copy SO assemblies and optional XML configuration files to the respective folders. ISVs and administrators are able to customize the settings by editing XML configuration files.

The CCL simplifies writing .NET-based service objects by providing base classes with default implementation of common functionality. IHVs are encouraged to derive from the bases classes, override provided implementation where necessary, and add device specific features. New .NET service objects are .NET classes that implement device class interfaces defined by the library. The CCL provides a generic service object class which may be used as a base class for their service objects. The class implements as much device independent functionality as possible to simplify writing of SOs.

The CCL provides a set of helper classes for functions that are likely to be needed by more than one vendor. This is directed at simplifying writing a .NET SO.

According to one embodiment, the library supports drag-n-drop style installation of .NET service objects. SO assemblies contain enough metadata information so that the CCL could use it without need for additional configuration. An additional XML configuration file may be defined to extend the assembly metadata.

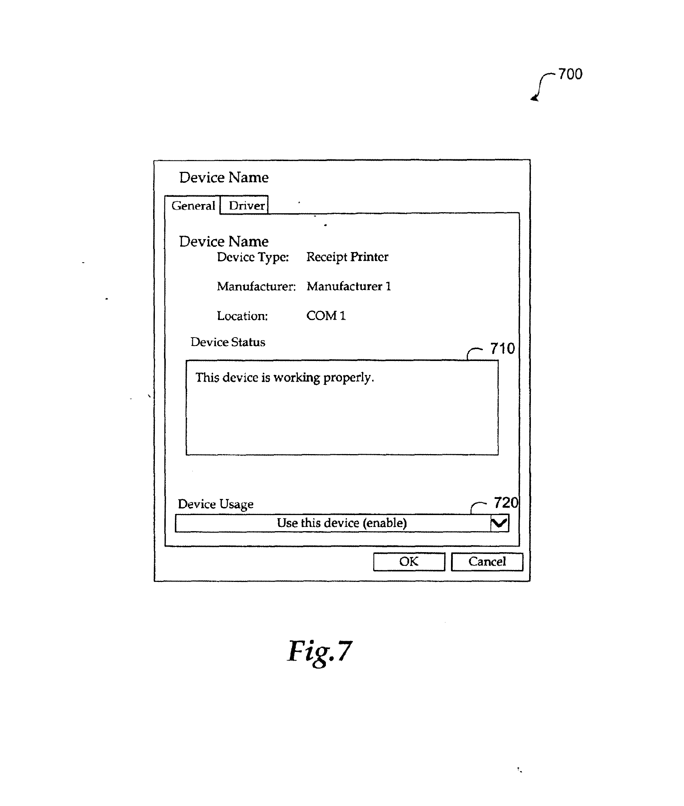

FIGURE 7 illustrates integration an exemplary display for providing information about POS devices attached to the system, in accordance with aspects of the invention.

Each device is capable of being enabled or disabled. Drop down list 720 may be used, or an application may call the CCL to disable/enable the device. A disabled device is not accessible by the CCL. Before attempting to access the device, the application should enable the device.

Each SO provider provides this type of management information for their respective devices.

A general tab and driver tab shows the following information for the device: name and description; hardware id and path (for Plug-n-Play devices); NET or legacy service object; assembly path, full name, version, class name (for .NET objects); and ProgId, ClsId, binary path, version, config parameters from the registry.

A device status (710) is also displayed for the device.

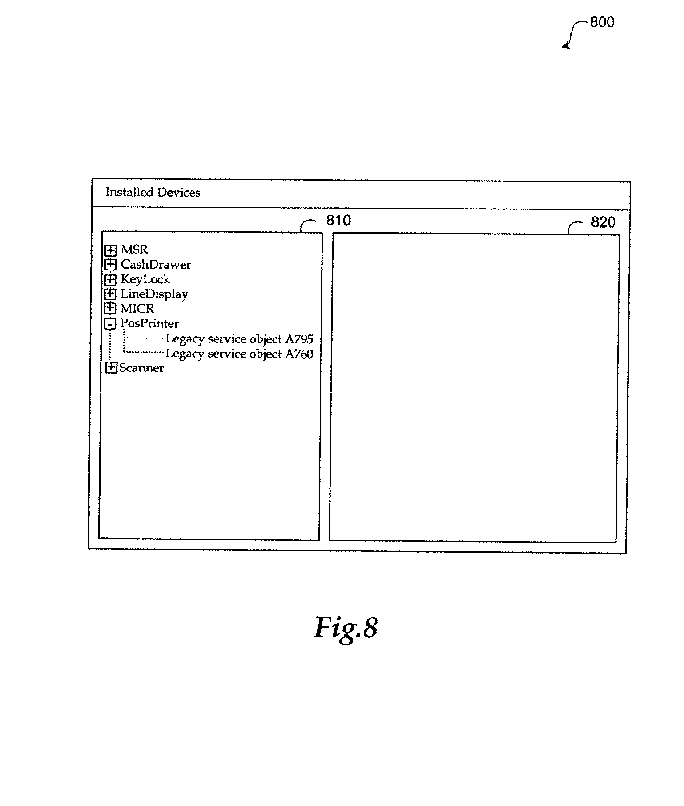

FIGURE 8 shows an exemplary screen shot of installed POS devices, in accordance with aspects of the present invention. As illustrated, the installed point of sale devices are illustrated in pane 910.

Pane 910 shows multiple views of installed devices and configurations, including items, such as: device classes and devices currently connected to the machine; device classes and devices that were ever connected to the machine; installed .NET service objects assemblies, classes, and physical devices they control; installed legacy service objects and physical devices they control; and global library configuration. This interface is directed at helping administrators drill down to low level details associated with a device, such as: what binary implements what service objects, where it's installed, what version, etc.

Another panel (920) hosts a set of context-dependent controls for selected tree-view nodes(s). It shows detailed information on selected node(s) and provide available actions. For example, for printers there may be controls to call methods Open, Claim, Enable, PrintNormal, CutReceipt, etc. There may also be a control to visualize events coming from the device. This tab will let admin quickly test attached hardware without running a real POS application.

Security settings may also be selected. For example, global security settings may be exposed that allow devices to be locked down such that the system allows only certain service objects and/or hardware to be available to applications. Statistics may also provide quick read/reset access to device statistics.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A method for providing Plug and Play (PnP) functionality for devices not supported by an operating system, comprising:
determining an event associated with a device;
determining an ID for the device;
mapping the device to a service object that is implemented in user mode code when the device is not supported by an operating system associated with the device; and
exposing a generic interface to an application such that the application may access the device through the generic interface.

2. The method of Claim 1, wherein the event is a plug and play (PnP) event.

3. The method of Claim 1, wherein the device is a retail device.

4. The method of Claim 3, wherein the retail device is selected from at least one of: a bump bar; a cash changer; a cash drawer; a credit authorization terminal; a coin dispenser; a fiscal printer; a hard totals; a keylock; a bar code scanner; a tone indicator; a motion detector; a line display; a magnetic ink character recognition reader; a magnetic stripe reader; a PIN pad; a point card; a POS keyboard; a POS printer; a remote order display; a scale; a signature capture; and a check image scanner.

5. The method of Claim 1, further comprising configuring the device when the event indicates that the device is installed.

6. The method of Claim 1, wherein exposing the generic interface further comprises providing the application with properties, methods and events associated with the device.

7. The method of Claim 1, wherein mapping the device to the service object that is implemented in user mode code when the device is not supported by an operating system associated with the device further comprises determining when the device is a legacy device and when the device is a PnP device.

8. A system for providing Plug and Play (PnP) functionality for devices not supported by an operating system, comprising:
an operating system including an event manager operating in a kernel mode of the operating system, configured to:
detect an event associated with a device not supported by the operating system; and
provide the event to a device manager application residing in a user mode;
the device manager application configured to determine when the device is a legacy device and when the device is a PnP device and including a common control library (CCL) configured to provide properties, methods and events associated with the device; and
an application configured to interact with the device manager application through the CCL and receive the properties, methods, and events associated with the device.

9. The system of Claim 8, wherein the operating system is further configured to provide a device ID to the device manager application; and wherein the device manager application is further configured to receive the device ID and in response to the ID: installing the device and mapping the device to a service object that is implemented in user mode code.

10. The system of Claim 9, wherein the device is a retail device selected from at least one of: a bump bar; a cash changer; a cash drawer; a credit authorization terminal; a coin dispenser; a fiscal printer; a hard totals; a keylock; a bar code scanner; a tone indicator; a motion detector; a line display; a magnetic ink character recognition reader; a magnetic stripe reader; a PIN pad; a point card; a POS keyboard; a POS printer; a remote order display; a scale; a signature capture; and a check image scanner.

11. The system of Claim 8, wherein the device manager application further comprises a legacy interoperability layer configured to enable legacy devices to be used by the application through the CCL.

12. The system of Claim 8, wherein the device manager application is further configured to register with the operating system to receive events associated with devices not supported by the operating system.

13. A computer-readable medium having computer-executable instructions for providing Plug and Play (PnP) functionality for devices not supported by an operating system, comprising:
a first component residing in a kernel mode of an operating system configured to provide events associated with a device;
a second component residing in a user mode of the operating system configured to receive the events provided by the first component and expose a generic interface to an application such that the application may access the device and receive the events through the generic interface.

14. The computer-readable medium of Claim 13, wherein the event relates to a plug and play (PnP) event.

15. The computer-readable medium of Claim 14, wherein the generic interface is further configured to provide a unified way to the application to interact with a PnP device and a legacy device.

16. The computer-readable medium of Claim 14, wherein the device is a retail device selected from at least one of: a bump bar; a cash changer; a cash drawer; a credit authorization terminal; a coin dispenser; a fiscal printer; a hard totals; a keylock; a bar code scanner; a tone indicator; a motion detector; a line display; a magnetic ink character recognition reader; a magnetic stripe reader; a PIN pad; a point card; a POS keyboard; a POS printer; a remote order display; a scale; a signature capture; and a check image scanner.

17. The computer-readable medium of Claim 13, wherein the second component is further configured to install the device when the event indicates that the device is installed.

18. The computer-readable medium of Claim 13, wherein exposing the generic interface further comprises providing the application with properties, methods and events associated with the device.

19. The computer-readable medium of Claim 18, wherein the second component is further configured to map the device to a service object that is implemented in user mode code when the device is not supported by the operating system.

20. The computer-readable medium of Claim 18, wherein the first component is further configured to provide a device ID to the second component; and wherein the second component is further configured to determine the type of device installed and configure the device based on a configuration file.
